# EUROPÄISCHE PATENTSCHRIFT

(11) **EP 0 747 126 B1**
(45) Veröffentlichungstag und Bekanntmachung des Hinweises auf die Patenterteilung: **05.11.1997**
(21) Anmeldenummer: 96107820.1
(22) Anmeldetag: 15.05.1996
(51) Int. Cl.: B03B 9/06, B07B 9/00

(54) **Verfahren und Vorrichtung zur Aufbereitung von Faserbestandteile und Fremdbestandteile enthaltenden Faserstoffen, insbesondere von Alt-Mineralwolle**
Method and device for treating fibrous material, particularly waste inorganic wool, comprising fibres and foreign matter
Procédé et dispositif pour le traitement de matières fibreuses, en particulier des déchets de laine minerale, comportant des fibres et des matières étrangères

(30) Priorität: 01.06.1995 DE 19519516
(43) Veröffentlichungstag der Anmeldung: 11.12.1996
(73) Patentinhaber: Thyssen Altwert Umweltservice GmbH, 45279 Essen (DE)
(72) Erfinder: Uhlig, Dieter, Prof.Dr.sc.techn., 09599 Freiberg (DE); Dombrowe, Helfried, Dr.-Ing., 09599 Freiberg (DE); Dallmann, Wolfgang, Dr.-Ing., 09599 Freiberg (DE); Richter, Hans-Georg, Dipl.-Ing., 02977 Hoyerswerda (DE); Heimhard, Hans-Jürgen, Dr.rer.nat., 45470 Mühlheim (DE)
(74) Vertreter: Prüfer, Lutz H., Dipl.-Phys.

(56) Entgegenhaltungen:
- EP-A- 0 039 628
- EP-A- 0 633 110
- DD-C- 292 939
- FR-A- 2 578 833

## Beschreibung

Die Erfindung betrifft ein Verfahren und eine Vorrichtung zur Aufbereitung von Faserbestandteile und Fremdbestandteile enthaltenden Faserstoffen, insbesondere von Alt-Mineralwolle.

Üblicherweise wird Mineralwolle, die beim Abriß von Kraftwerksanlagen in großem Umfang anfällt, auf einer Deponie endgelagert. Wegen der geringen Schüttdichte von üblicherweise weniger als 100 kg/m³ nimmt die Alt-Mineralwolle ein unverhältnismäßig hohes Volumen ein, weshalb die Deponierung mit hohen Kosten verbunden ist.

Es ist bekannt, die bei der Herstellung von Mineralwollematten entstehenden Mineralwolleabfälle, wie z.B. den Kantenabschnitt in den Produktionsprozeß zurückzuführen. Dabei werden die Abfälle in Kugelmühlen zermahlen.

Zur Aufarbeitung von Alt-Mineralwollematten, die eine Kaschierung aus Papier oder Aluminiumfolie oder eine Drahtbewehrung aufweisen, sind Kugelmühlen jedoch nicht sehr geeignet. Kugelmühlen haben den Nachteil, daß die Selektivität der Mahlung auf Aluminiumfolie beschränkt ist, während Papier mit der Mineralwolle zu Pulver gemahlen wird. Ferner haben Kugelmühlen den Nachteil, daß es zu Anbackungen im Mahlraum kommen kann, die den Mahlprozeß erheblich stören.

Aus der DD 292 939 ist ein Verfahren und eine Anlage zur Aufbereitung von Mineralwolle bekannt. Bei dem Verfahren werden zuerst die Mineralwollematten von ihren Umhüllungen befreit, anschließend zerkleinert und die so entstandenen Mineralwolleteilchen desinfiziert, gespült und ausgepreßt. Daran schließt sich wieder ein Zerkleinerungsvorgang an.

Aus der FR-A-2 578 833 ist ein Verfahren und eine Vorrichtung zur Aufbereitung von Glasfaserabfällen, welche Klebstoffe enthalten, bekannt. In einem ersten Schritt werden die Klebstoffe unter Einwirkung natürlicher Strahlung, Auflösung in Flüssigkeit oder thermische Behandlung entfernt. In einem nächsten Schritt werden in einer ersten Zerkleinerungseinrichtung die Fasern mit Hilfe eines rotierenden Messers in Stücke zerkleinert. Diese Stücke werden anschließend nochmals mit Hilfe von archimedischen Schrauben zerkleinert. Anschließend werden Fremdbestandteile mit Hilfe eines vibrierenden Siebes abgetrennt. In einer zweiten Zerkleinerungseinrichtung, beispielsweise in einer Kugelmühle, werden die Fasern in Pulverform zerkleinert.

Es ist Aufgabe der Erfindung, ein Verfahren und eine Vorrichtung zum Verdichten und Trennen bzw. Reinigen von Alt-Mineralwolle oder anderen Faserstoffen anzugeben, das einerseits eine kostengünstige Deponierung ermöglicht und/oder andererseits aus einem Abfallprodukt einen gereinigten und verwertbaren Rohstoff erzeugt.

Die Aufgabe wird gelöst durch ein Verfahren nach Patentanspruch 1 bzw. eine Vorrichtung nach Patentanspruch 7. Weiterbildungen der Erfindung sind in den Unteransprüchen angegeben.

In der ersten Zerkleinerungsstufe wird der Faserstoff vorzerkleinert und bezüglich seiner Fremdbestandteile aufgeschlossen.

Die Abtrennung der ferromagnetischen Fremdbestandteile erfolgt mittels eines Elektromagneten, der über einem die Faserstoffe transportierenden Förderband angeordnet ist.

Bei dem Schritt der selektiven Zerkleinerung des Faserstoffes bleiben Kaschierungsstoffe wie Papier oder Aluminiumfolie unzerkleinert.

Bei der Vorrichtung weist das erste Sieb der zweiten Siebeinrichtung eine Maschenweite von etwa 31,5 mm und das zweite Sieb der zweiten Siebeinrichtung eine Maschenweite von etwa 2 mm auf.

Das erste Sieb kann oberhalb des zweiten Siebes angeordnet sein. Das erste Sieb kann aber auch in Materialtransportrichtung hinter dem zweiten Sieb angeordnet sein.

Es ist ferner eine Transporteinrichtung zum Rückführen des Siebüberlaufes des zweiten Siebes in die zweite Zerkleinerungseinrichtung vorgesehen.

Alle die Vorrichtung bildenden Bestandteile können in Containern angeordnet sein.

Die Vorteile der Erfindung bestehen darin, daß Alt-Mineralwolle direkt aus dem Abriß von Industrieanlagen ohne weitere Vorbehandlung verarbeitet werden kann. Durch die dabei stattfindende Verdichtung der sehr voluminösen Mineralwolle auf mehr als das Zehnfache des Ausgangsschüttgewichtes ist es möglich, Deponiekosten einzusparen. Zugleich entsteht aber ein reines und feinzerkleinertes Mineralfaser-Pulver. Mit diesen Produkteigenschaften liegt ein veredeltes Produkt vor, das nicht mehr unbedingt als Abfall den Weg auf eine Deponie gehen muß, sondern den Charakter eines Wertstoffes annimmt.

Weitere Merkmale und Zweckmäßigkeiten der Erfindung ergeben sich aus der Beschreibung eines Ausführungsbeispieles anhand der Figuren.

Von den Figuren zeigen:
- Fig. 1: eine schematische Ansicht einer Ausführungsform der Vorrichtung;
- Fig. 2: eine schematische Schnittansicht der Vorrichtung zur Magnetabscheidung entlang der Linie II-II in Fig. 1; und
- Fig. 3: ein Flußdiagramm des Verfahrens.

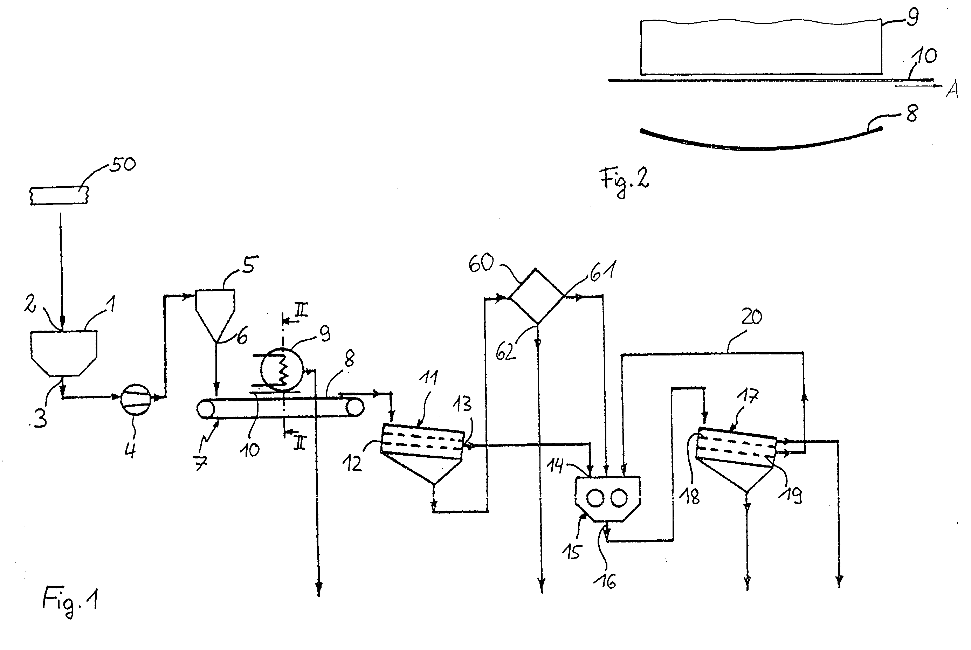

Wie aus Fig. 1 ersichtlich ist, weist die Vorrichtung eine Schneidmühle 1 mit einer Aufgabeöffnung 2 für Alt-Mineralwolle 50 und einer Austragsöffnung 3 auf. Die Austragsöffnung 3 ist mit einem Lüfter 4 verbunden, dem ein Zyklon 5 zur Abtrennung der festen Bestandteile aus dem Gemisch aus Luft und zerkleinerten Mineralwollebestandteilen nachgeschaltet ist. Unterhalb einer Austragsöffnung 6 des Zyklons 5 ist ein Bandförderer mit einem Förderband 8 angeordnet. Oberhalb des Förderbandes 8 ist ein Elektro-Hängemagnet 9 mit einem zwischen dem Förderband 8 und dem Magnet 9 verlaufenden Austragsband 10 zum Abtrennen und Abtransportieren von in der zerkleinerten Mineralwolle auf dem Förderband 8 enthaltenen ferromagnetischen Bestandteilen angeordnet. Wie aus Fig. 2 ersichtlich ist, verläuft die Vorschubrichtung A des Austragsbandes 10 senkrecht zu der Vorschubrichtung des Förderbandes 8. Eine besonders gute Abscheidung von ferromagnetischen Bestandteilen beispielsweise zerkleinerten Stücken von Bewehrungsdraht oder Rost ergibt sich, wenn bei einem Abstand von etwa 140 mm zwischen der Unterseite des Hängemagneten 9 und dem Förderband 8 durch geeignete Einstellung des Hängemagneten 9 die Feldstärke unmittelbar unterhalb des Austragsbandes 230 mT und auf dem Förderband 85 mT beträgt.

Im Bereich des in Vorschubrichtung liegenden Endes des Förderbandes 8 ist eine erste Siebeinrichtung 11 zur Aufnahme der von dem Förderband 8 transportieren zerkleinerten Mineralwolle angeordnet. Zur Sichtung des Siebdurchlaufes ist der Siebeinrichtung 11 ein Sichter 60, beispielsweise ein Streutellersichter, zum Abtrennen von verfilzten Faserbestandteilen von den feinkörnigen Fremdbestandteilen nachgeschaltet.

Ein sich oberhalb des Siebbodens 12 der Siebeinrichtung 11 befindlicher Auslaß 13 ist mit einer Aufgabeöffnung 14 einer Hochdruckwalzenmühle 15 zum Zuführen des Siebüberlaufes in die Hochdruckwalzenmühle 15 verbunden. Als geeignet erweist sich eine Hochdruckwalzenmühle mit einem geriffelten Walzenprofil, wobei die Walzen gegensinnig rotieren. Eine solche Hochdruckwalzenmühle ist unter dem Namen Gutbett-Walzenmühle oder Rollenpresse bekannt. Ihre Besonderheiten und Vorteile gegenüber anderen Walzenmühlen bestehen in einer hohen Druckbeanspruchung des Mahlgutes in Form eines Gutbetts zwischen zwei gleich großen, gegensinnig und mit gleicher Geschwindigkeit rotierenden Walzen.

Ein Ausgang 61 des Sichters 60 ist mit der Aufgabeöffnung 14 der Hochdruckwalzenmühle 15 zum Zuführen der Faseranteile aus dem Sichter in die Hochdruckwalzenmühle verbunden. Der andere Ausgang 62 des Sichters 60 dient zum Abführen der feinkörnigen Fremdbestandteile.

Eine Austragsöffnung 16 der Hochdruckwalzenmühle 15 ist mit dem Einlaß einer zweiten Siebeinrichtung 17 verbunden, die mindestens zwei Siebe 18 und 19 mit unterschiedlichen Maschengrößen aufweist. Auf dem Sieb 18 mit einer Maschenweite von beispielsweise 31,5mm werden die unzerkleinerten Stücke von Papier und Aluminiumfolie im Siebüberlauf abgetrennt. Auf dem Sieb 19 mit einer Maschenweite von beispielsweise 2mm wird das Mineralwollepulver im Siebdurchgang abgetrennt. Zur Rückführung der Fraktion 2 bis 31,5mm, die noch unzerkleinerte Mineralwollefasern enthält, in die Hochdruckwalzenmühle 15 ist eine Transporteinrichtung 20 vorgesehen. Die Siebe 18 und 19 sind in Form eines Doppeldecksiebes übereinander angeordnet.

Die gesamte Vorrichtung kann in Normkontainern untergebracht und auf Lkws angeordnet sein.

Abwandlungen der Vorrichtung sind möglich. Beispielsweise kann die Schneidmühle 1 mit einem Siebeinsatz versehen sein. Ferner kann statt der Hochdruckwalzenmühle auch eine Stiftmühle, eine Schlagkreuzmühle oder eine Schneidmühle verwendet werden. Die besten Zerkleinerungsergebnisse werden jedoch mit der Hochdruckwalzenmühle erreicht. Die zweite Siebeinrichtung 17 kann auch so gestaltet sein, daß auf einem Deck nacheinander zwei unterschiedliche Maschenweiten - vorn die kleinere, dahinter die größere - verwendet werden. Eine solche Siebgestaltung ist gegenüber der Doppeldeckanordnung kostengünstiger.

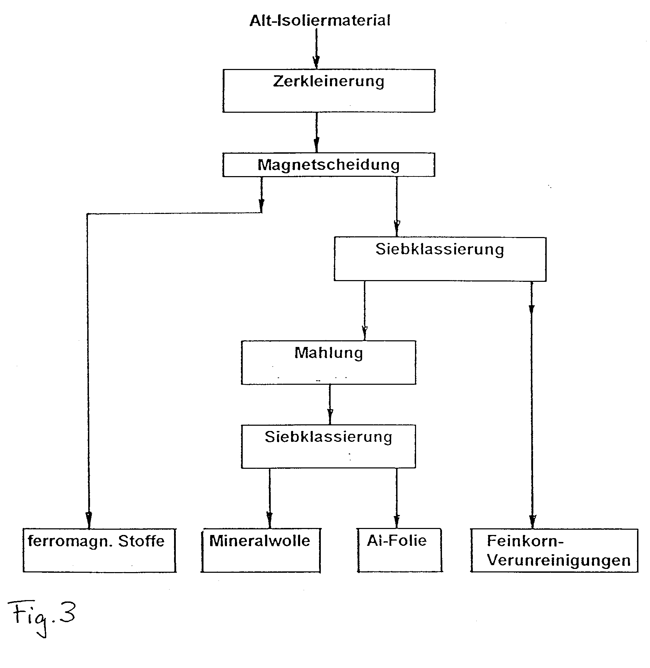

Anhand von Fig. 3 werden im folgenden die Schritte des erfindungsgemäßen Verfahrens erläutert. Die Alt-Mineralwolle 50, die üblicherweise unvorbehandelt in Bahnen vorliegt und Kaschierungen aus Papier oder Aluminiumfolie und/oder Drahtgewebe enthält, wird zunächst der Schneidmühle 1 aufgegeben, in der eine Vorzerkleinerung, verbunden mit einem Aufschluß bezüglich der Kaschierung mit Papier, Alufolie und Draht, stattfindet. Bei der Zerkleinerung der Alt-Mineralwolle entsteht ein feinflockiges Produkt. Durch die Vorzerkleinerung in der Schneidmühle 1 wird etwa eine Verdoppelung des Ausgangsschüttgewichtes der in die Schneidmühle 1 eingegebenen Alt-Mineralwolle erreicht. Der Austrag der vorzerkleinerten Mineralwolle aus dem Mahlraum der Schneidmühle 1 erfolgt mit dein Lüfter 4 und die Trennung der zerkleinerten Mineralwolle von der Luft in den nachgeschalteten Zyklon 5.

Die in der Schneidmühle vorzerkleinerte Mineralwolle wird direkt auf das Förderband 8 des Bandförderers aufgegeben. Dort werden ferromagnetische Fremdbestandteile, wie zerkleinerte Drahtstücke oder Rost aus der Mineralwolle herausgehoben und mit dem unter dem Magnetsystem angeordneten Austragsband 10 zur Seite ausgetragen. Die Bandbreite und die Bandgeschwindigkeit des Förderbandes werden dabei dem Durchsatz angepaßt.

Nach Abtrennung der ferromagnetischen Bestandteile folgt das Abtrennen von feinkörnigen Verunreinigungen in der Siebeinrichtung 11. Der Siebdurchlauf in dem Sieb 12 der ersten Siebeinrichtung 11 besteht primär aus Schmelzperlen, die noch vom Herstellungsprozeß der Mineralwolle herstammen und sekundär aus staubförmigen Verunreinigungen wie z.B. Ruß. Im Siebdurchlauf sind aber auch bereits feinzerkleinerte Mineralwollefasern enthalten. Dieser Feinfaseranteil verfilzt teilweise und bildet kleine Wollkügelchen. Diese werden mittels des mit der Siebeinrichtung 11 verbundenen Sichters 60 abgetrennt und danach der Hochdruckwalzenmühle 15 zugeführt. Ferner wird der Siebüberlauf der ersten Siebeinrichtung 11 der Hochdruckwalzenmühle 15 zugeführt. Hier findet selektiv eine Feinzerkleinerung der Mineralwollefasern statt, während Kaschierungsstoffe wie Papier und Aluminiumfolie im wesentlichen unzerkleinert bleiben.

Diese selektive Zerkleinerung ermöglicht nach der Behandlung in der Hochdruckwalzenmühle 15 eine Abtrennung der Kaschierungsstoffe durch Klassierung in der Siebeinrichtung 17. In der Siebeinrichtung 17 wird eine Abtrennung der unzerkleinerten Papier- bzw. Aluminiumfoliebestandteilen aus dem Austrag der Hochdruckwalzenmühle 15 über das Sieb 18 vorgenommen. Der Siebüberlauf des Siebes 18 wird abgeführt, während der Siebdurchlauf des Siebes 18 dem Sieb 19 zugeführt wird. Eine Trennung von Mineralwollepulver und Mineralwollefasern wird auf dem engmaschigeren Sieb 19 vorgenommen, wobei das Mineralwollepulver als Siebdurchlauf des Siebes 19 beispielsweise in einem Plastiksack aufgefangen wird und der Siebüberlauf des Siebes 19, der noch unzerkleinerte Faserbestandteile enthält, mittels der Transporteinrichtung der Hockdruckwalzenmühle 15 erneut zugeführt wird, um so endgültig zu Pulver zermahlen zu werden.

Bei dem erfindungsgemäßen Verfahren findet einerseits eine Verdichtung der sehr voluminösen Mineralwolle auf mehr als das Zehnfache des Ausgangsschüttgewichtes statt. Zugleich entsteht auch ein reines und fein zerkleinertes Mineralfaserpulver, das als veredeltes Produkt nicht mehr als Abfall den Weg auf eine Deponie gehen muß, sondern den Charakter eines Wertstoffes annimmt. Beispielsweise ist es möglich, das so gewonnene Mineralfaserpulver mit Wasserglas über eine Tablettenpresse zu Kügelchen oder anderen Formen zu verarbeiten und anschließend dieses aus Kugeln bestehende Material wieder als Isoliermaterial zu verwenden. Von Vorteil erweist es sich, daß das so hergestellte Material nach dem Behandlungsprozeß nur aus inertem anorganischen Material ohne organische Belastung besteht. Ferner treten bei dem Verfahren keine Glühverluste auf.

Falls das Mineralfaserpulvermaterial nicht als Baustoff weiterverwendet wird, ergibt sich eine Einsparung von Deponiekosten im Vergleich zu unaufgearbeiteter Alt-Mineralwolle, da das aufgearbeitete Produkt eine wesentlich höhere Schüttdichte aufweist.

## Patentansprüche

1. Verfahren zur Aufbereitung von Faserbestandteile und Fremdbestandteile einschließlich Kaschierungsmaterial enthaltenden Faserstoffen, insbesondere von Alt-Mineralwolle, mit den Schritten:
Zerkleinern des Faserstoffes (50) in einer ersten Zerkleinerungsstufe (1);
Abtrennen von feinkörnigen Fremdbestandteilen durch Siebklassierung;
selektives Zerkleinern der Faserbestandteile in einer zweiten Zerkleinerungsstufe (15), wobei das Kaschierungsmaterial im wesentlichen unzerkleinert bleibt, und Abtrennen von weiteren Fremdbestandteilen in Form der Kaschierungsstoffe durch Siebklassierung.

2. Verfahren nach Anspruch 1,
gekennzeichnet durch einen Schritt des Abtrennens von ferromagnetischen Fremdbestandteilen durch Magnetscheidung nach dem Schritt des Zerkleinerns in der ersten Zerkleinerungsstufe (1).

3. Verfahren nach Anspruch 1 oder 2,
dadurch gekennzeichnet, daß in der zweiten Zerkleinerungsstufe eine Hochdruckwalzenmuhle (15) eingesetzt wird, wobei die Faserbestandteile zerkleinert werden und Kaschierungsmaterial im wesentlichen unzerkleinert bleibt.

4. Verfahren nach einem der Ansprüche 1 bis 3,
dadurch gekennzeichnet, daß der Faserstoff in der ersten Zerkleinerungsstufe (1) mittels einer Schneidmühle (1) zerkleinert wird.

5. Verfahren nach einem der Ansprüche 1 bis 4,
dadurch gekennzeichnet, daS der Schritt des Abtrennens der feinkörnigen Fremdbestandteile einen Schritt des Windsichtens umfaßt, bei dem bereits zerkleinerte Faserbestandteile von den abzutrennenden feinkörnigen Fremdbestandteilen abgetrennt werden.

6. Verfahren nach einem der Ansprüche 1 bis 5,
dadurch gekennzeichnet, daß in der zweiten Zerkleinerungsstufe (15) unzerkleinert gebliebene Faserbestandteile nach der Abtrennung der unmagnetischen Fremdbestandteile wieder in die zweite Zerkleinerungsstufe (15) rückgeführt werden.

7. Vorrichtung zur Aufbereitung von Faserbestandteile und Fremdbestandteile einschließlich Kaschierungsmaterial enthaltenden Faserstoffen, insbesondere von Alt-Mineralwolle, mit
einer ersten Zerkleinerungseinrichtung (1) zum Vorzerkleinern und Aufschließen des Faserstoffes (50), mit einem Materialeinlaß (2) und einem Materialauslaß (3),
einer ersten Siebeinrichtung (11) zum Abtrennen von feinkörnigen Fremdbestandteilen, die mit dem Materialauslaß (3) der ersten Zerkleinerungsstufe verbunden ist,
einer zweiten Zerkleinerungseinrichtung (15), in der die Faserbestandteile selektiv zerkleinert werden, während die Kaschierungsstoffe unzerkleinert bleiben, mit einem Materialeinlaß (14) zum Zuführen des Siebüberlaufes aus der ersten Siebeinrichtung (11) und mit einem Materialauslaß (16) und
einer zweiten Siebeinrichtung (17) zum Abtrennen von Fremdbestandteilen in Form der Kaschierungsstoffe aus dem Austrag der zweiten Zerkleinerungseinrichtung (15), die mit dem Materialauslaß (16) der zweiten Zerkleinerungseinrichtung verbunden ist.

8. Vorrichtung nach Anspruch 7,
dadurch gekennzeichnet, daß zwischen dem Materialauslaß (3) der ersten Zerkleinerungseinrichtung (1) und der ersten Siebeinrichtung (11) ein Förderband (8) mit einem oberhalb des Förderbandes (8) angeordneten Elektromagneten (9) zum Abtrennen von ferromagnetischen Fremdbestandteilen aus dem in der ersten Zerkleinerungseinrichtung (1) zerkleinerten Faserstoff (50) vorgesehen ist.

9. Vorrichtung nach Anspruch 7 oder 8,
dadurch gekennzeichnet, daß die erste Zerkleinerungseinrichtung (1) eine Schneidmühle umfaßt.

10. Vorrichtung nach einem der Ansprüche 7 bis 9,
dadurch gekennzeichnet, daß die zweite Zerkleinerungseinrichtung (15) eine Hochdruckwalzenmühle umfaßt.

11. Vorrichtung nach einem der Ansprüche 7 bis 10,
dadurch gekennzeichnet, daß der ersten Siebeinrichtung (11) ein Sichter (60) zum Sichten des Siebdurchlaufes nachgeschaltet ist.

12. Vorrichtung nach einem der Ansprüche 7 bis 11,
dadurch gekennzeichnet daß die zweite Siebeinrichtung (17) ein erstes und ein zweites Sieb (18, 19) mit unterschiedlichen Maschenweiten umfaßt, wobei das erste Sieb (18) mit der größeren Maschenweite zum Abtrennen von Fremdbestandteilen wie unzerkleinertes Kaschierungsmaterial aus dem Materialaustrag der zweiten Zerkleinerungseinrichtung (15) vorgesehen ist und das zweite Sieb (19) mit der kleineren Maschenweite zum Abtrennen von unzerkleinerten Faserbestandteilen von durch die zweite Zerkleinerungseinrichtung (15) erzeugten Pulvermaterial vorgesehen ist.

## Claims

1. Process for the processing of fibre constituents and fibre materials containing foreign constituents including lining material, in particular of used mineral wool, having the steps of:
comminution of the fibre material (50) in a first comminution stage (1);
separation of fine-grained foreign constituents by screen classification;
selective comminution of the foreign constituents in a second comminution stage (15), the lining material remaining substantially uncomminuted, and separation of further foreign constituents in the form of the lining materials by screen classification.

2. Process according to Claim 1, characterised by a step of separation of ferromagnetic foreign constituents by magnetic separation after the step of comminution in the first comminution stage (1).

3. Process according to Claim 1 or 2, characterised in that a high-pressure roller mill (15) is used in the second comminution stage, the fibre constituents being comminuted and lining material remaining substantially uncomminuted.

4. Process according to one of Claims 1 to 3, characterised in that the fibre material is comminuted by means of a cutting mill (1) in the first comminution stage (1).

5. Process according to one of Claims 1 to 4, characterised in that the step of separation of the fine-grained foreign constituents comprises a step of air separation, in which fibre constituents which have already been comminuted are separated from the fine-grained foreign constituents which are to be separated.

6. Process according to one of Claims 1 to 5, characterised in that fibre constituents which have remained uncomminuted in the second comminution stage (15) are returned to the second comminution stage (15) after separation of the non-magnetic foreign constituents.

7. Apparatus for the processing of fibre constituents and fibre materials containing foreign constituents including lining material, in particular of used mineral wool, having
a first comminution device (1) for the pre-comminution and dissociation of the fibre material (50), having a material inlet (2) and a material outlet (3),
a first screening device (11) for the separation of fine-grained foreign constituents, which is connected to the material outlet (3) of the first comminution stage,
a second comminution device (15), in which the fibre constituents are selectively comminuted, whereas the lining materials remain uncomminuted, having a material inlet (14) for supplying the screen overflow from the first screening device (11) and having a material outlet (16) and
a second screening device (17) for the separation of foreign constituents in the form of the lining materials from the discharge of the second comminution device (15), which is connected to the material outlet (16) of the second comminution device.

8. Apparatus according to Claim 7, characterised in that a conveyor belt (8) having an electromagnet (9), arranged above the conveyor belt (8), for the separation of ferromagnetic foreign constituents from the fibre material (50) comminuted in the first comminution stage (1) is provided between the material outlet (3) of the first comminution device (1) and the first screening device (11).

9. Apparatus according to Claim 7 or 8, characterised in that the first comminution device (1) comprises a cutting mill.

10. Apparatus according to one of Claims 7 to 9, characterised in that the second comminution device (15) comprises a high-pressure roller mill.

11. Apparatus according to one of Claims 7 to 10, characterised in that a sifter (60) for the sifting of the screen underflow is arranged downstream of the first screening device (11).

12. Apparatus according to one of Claims 7 to 11, characterised in that the second screening device (17) comprises a first and a second screen (18, 19) with different mesh widths, the first screen (18) with the larger mesh width being intended for the separation of foreign constituents such as uncomminuted lining material from the material discharge of the second comminution device (15), and the second screen (19) with the smaller mesh width being intended for the separation of uncomminuted fibre constituents from powder material produced by the second comminution device (15).

## Revendications

1. Procédé pour le traitement de matières fibreuses comportant des fibres et des matières étrangères, y compris du matériau de couverture, en particulier des déchets de laine minérale, comprenant les étapes de :
broyage de la matière fibreuse (50) au cours d'une première étape de broyage (1) ;
séparation des matières étrangères en grains fins par triage à tamis ;
broyage sélectif des composantes fibreuses au cours d'une deuxième étape de broyage (15), le matériau de couverture restant pour l'essentiel intact, et séparation des autres matières étrangères prenant la forme de matériau de couverture par triage à tamis.

2. Procédé selon la revendication 1, caractérisé en ce qu'il comporte une étape de séparation des matières étrangères ferromagnétiques par séparation magnétique après le broyage dans la première étape de broyage (1).

3. Procédé selon la revendication 1 ou 2, caractérisé en ce que la deuxième étape de broyage fait appel à un moulin à rouleaux à haute pression (15), les composantes fibreuses étant hachées et le matériau de couverture restant pour l'essentiel intact.

4. Procédé selon l'une ou l'ensemble des revendications 1 à 3, caractérisé en ce que la matière fibreuse est broyée au cours de la première étape de hachage (1) au moyen d'un moulin de coupe (1).

5. Procédé selon l'une ou l'ensemble des revendications 1 à 4, caractérisé en ce que l'étape de séparation des matières étrangères en grains fins comprend une étape de séparation à vent, au cours de laquelle les composantes fibreuses déjà broyées sont séparées des matières étrangères en grains fins à séparer.

6. Procédé selon l'une ou l'ensemble des revendications 1 à 5, caractérisé en ce que les composantes fibreuses non broyées au cours de la deuxième étape de broyage (15) sont ramenées à la deuxième étape de broyage (15) après la séparation des matières étrangères non magnétiques.

7. Dispositif pour le traitement de matières fibreuses comportant des fibres et des matières étrangères, y compris du matériau de couverture, en particulier des déchets de laine minérale, comportant :
un premier dispositif de broyage (1) pour le broyage préalable et la dissociation de la matière fibreuse (50), avec une entrée de matériau (2) et une sortie de matériau (3),
un premier dispositif de tamisage (11) destiné à séparer les matières étrangères en grains fins, qui est relié à la sortie de matériau (3) de la première étape de broyage,
un deuxième dispositif de broyage (15) dans lequel les composantes fibreuses sont broyées sélectivement, tandis que le matériau de couverture reste pour l'essentiel intact, avec une entrée de matériau (14) amenant l'écoulement du crible provenant du premier dispositif de tamisage (11) et avec une sortie de matériau (16) et
un deuxième dispositif de tamisage (17) destiné à séparer les matières étrangères prenant la forme de matériaux de couverture dans la sortie du deuxième dispositif de broyage (15), qui est relié à la sortie de matériau (16) du deuxième dispositif de broyage (16).

8. Dispositif selon la revendication 7, caractérisé en ce qu'il est prévu entre la sortie de matériau (3) du premier dispositif de broyage (1) et le premier dispositif de tamisage (11) une bande transporteuse (8) avec un électro-aimant (9) disposé au-dessus de la bande transporteuse (8) et destiné à séparer le matières étrangères ferromagnétiques de la matière fibreuse (50) broyée dans le premier dispositif de broyage (1).

9. Dispositif selon la revendication 7 ou 8, caractérisé en ce que le premier dispositif de broyage (1) comprend un moulin de coupe.

10. Dispositif selon l'une ou l'ensemble des revendications 7 à 9, caractérisé en ce que le deuxième dispositif de broyage (15) comprend un moulin à rouleaux à haute pression.

11. Dispositif selon l'une ou l'ensemble des revendications 7 à 10, caractérisé en ce qu'un crible (60) pour le criblage de l'écoulement du tamis est monté en aval du premier dispositif de tamisage (11).

12. Dispositif selon l'une ou l'ensemble des revendications 7 à 11, caractérisé en ce que le deuxième dispositif de tamisage (17) comprend un premier tamis et un deuxième (18, 19) dont le maillage est de largeur différente, le premier tamis (18) dont les mailles sont les plus larges étant destiné à séparer les matières étrangères telles que le matériau de couverture non broyé dans la sortie de matériau du deuxième dispositif de broyage (15) et le deuxième tamis (19) dont les mailles sont les plus étroites étant destiné à séparer les composantes fibreuses non broyées dans le matériau pulvérulent produit par le deuxième dispositif de broyage (15).
